# EUROPÄISCHE PATENTANMELDUNG

(11) **EP 0 815 989 A2**
(43) Veröffentlichungstag der Anmeldung: **07.01.1998**
(21) Anmeldenummer: 97111092.9
(22) Anmeldetag: 03.07.1997
(51) Int. Cl.: B22D 19/14, C04B 41/51, C04B 41/52

(54) **Verfahren zur Herstellung von lokal keramikverstärkten, gegossenen Bremsscheiben aus Leichtmetallegierungen**

(30) Priorität: 06.07.1996 DE 19627358
(71) Anmelder: THYSSEN GUSS AG, 45128 Essen (DE); SAB WABCO BSI Verkehrstechnik Products GmbH, 42859 Remscheid (DE)
(72) Erfinder: Engels, Albrecht, Dr., 42859 Remscheid (DE); Ruppert, Helmut, 42857 Remscheid (DE); Zeuner, Thomas, 42857 Remscheid (DE); Stojanov, Pejo, Dr., 52074 Aachen (DE)
(74) Vertreter: Dahlkamp, Heinrich-Leo

(57) **Zusammenfassung**

Die Erfindung betrifft ein Verfahren zur Herstellung von lokal keramikverstärkten, gegossenen Bremsscheiben aus Leichtmetallegierungen, vorzugsweise AlSi-Legierungen, insbesondere für Achs- oder Radbremsscheiben von Schienenfahrzeugen, mit einem ringförmigen Tragkörper aus einer Leichtmetallegierung, auf welchem sich ein- oder beidseitig eine Schicht befindet, die aus mit der Leichtmetallegierung gefüllten offenporigen Schaumkeramikelementen besteht. Die Erfindung besteht darin, daß die offenporigen Keramiken vor dem Eingießen der Leichtmetallegierung mit einem Metall beschichtet werden.

## Beschreibung

Die Erfindung bezieht sich auf ein Verfahren zur Herstellung von lokal keramikverstärkten, gegossenen Bremsscheiben aus Leichtmetallegierungen gemäß Oberbegriff der Ansprüche 1 und 6.

Das Gußteil Bremsscheibe zählt zum unverzichtbaren Bestandteil der mechanischen Bremsanlage in Schienenfahrzeugen. Durch den fortschreitenden Einsatz von Leichtmetallen in Komponenten und Systemen zur Einsparung von Energie bzw. zur entscheidenden Verbesserung der Gebrauchseigenschaften ergibt sich besonders im Hinblick auf die Reduzierung beschleunigter Massen bei Bremsscheiben die Forderung nach Fertigung in Leichtmetallwerkstoffen.

Da herkömmliche Leichtmetallgußwerkstoffe hinsichtlich ihrer mechanischtechnologischen Eigenschaften stark von bisher bewährten Fe-C-Werkstoffen abweichen, sind weitgehend konstruktive Änderungen an den Bauteilen vorzunehmen. Doch auch die verringerte maximale Verarbeitungstemperatur bei Leichtmetallen muß berücksichtigt und die Verschleißfestigkeit verbessert werden. Die Verbesserung der Verschleißfestigkeit ist jedoch nur in den belasteten Bereichen zwingend erforderlich.

Aus der DE 43 22 113 A1 ist bekannt, Bremsscheiben mit offenporiger Schaumkeramik durch Eingießen an der Oberfläche verstärken zu wollen und damit die Verschleißfestigkeit lokal zu verbessern. Die verschleißmindernde Ausbildung von Gußoberflächen durch den Einsatz von porösen Hartstoffen beschreiben bereits u.a. DD 289 947 A5 und EP 0 575 685 A1.

Mit solchen einzugießenden Einlagen ergeben sich im weiteren Vorteile hinsichtlich der Wärmeleitfähigkeit, Temperaturbeständigkeit, der Reibwertschwankungen und des Verschleißes. Die Verwendung herkömmlicher Gießfilter zur lokalen Verstärkung von Gußteilen führt jedoch zu Problemen, da diese Gießfilter in der Regel mit chemischen Überzügen zur Verbesserung der Handhabung behandelt werden, die bei Kontakt mit der Schmelze zu Ausgasungen führen können. Weiterhin haben diese Keramiken nicht nur offene makroskopische Poren, sondern besitzen darüber hinaus eine äußerst feine mikroskopische Porosität, deren Infiltration durch das Gießmetall nur unter bestimmten Voraussetzungen zu erzielen ist. Herkömmliche Gießverfahren versagen hierbei und es entsteht in den verstärkten Bereichen ein feines, dreidimensionales Netz aus Lufteinschlüssen, die sich bei Energieeintrag durch Bremsbelastung aufheizen und zu unzulässiger thermischer Belastung führen. Die Ausbildung eines dreidimensionalen Netzes aus Luft wird zudem noch gefördert durch die Tatsache, daß Metall und Keramik bei Abkühlung eine unterschiedliche Schwindung aufweisen und sich somit das Metall von der Keramik ablösen kann.

Die in der DE 43 22 113 A1 beschriebenen Schaumkeramiken zeigen bezüglich der Matrixausbildung der makroskopischen und mikroskopischen Porositäten Unterschiede. Diese Unterschiede stellen Gefügeinhomogenitäten dar, die sich negativ auf den Reibwert und die Einbindung der Keramik durch Metallmatrix auswirken.

Alle beschriebenen Eigenarten beim Einsatz von Schaumfiltern ohne entsprechende Vorbehandlung derselben und ohne Kombination mit einer geeigneten Gießtechnologie beschränken die Brauchbarkeit eines derartigen Bauteils.

Zur Herstellung der beschriebenen Bremsscheibe ist in der DE 43 22 113 A1 erwähnt, daß vor dem Gießvorgang ein aus offenporigem Keramikschwamm gebildeter Ringkörper in die Gießform eingelegt wird, der beim Gießvorgang des Tragkörpers sich mit dessen Metall füllt.

Aus der EP 0 624 413 A1 ist ein sogenanntes Niederdruck-Gießverfahren für das Gießen von Gußstücken mit dünnwandigen Abschnitten in einer unter Vakuum stehenden Form bekannt, wobei das Tiegelgefäß in einem Ofen angeordnet ist, Ofen und Form unter einem gleichen Vakuum verbunden werden und das Metall durch Unterdrucksetzen des Ofens in die Form eingeleitet wird und am Ende des Füllvorganges die Form und der Ofen auf Drücke höher oder gleich dem atmosphärischen Druck gebracht werden, wobei der Druck des Ofens höher als der der Form bleibt und diese Drücke während der Abkühlung und Erstarrung des Metalls gehalten werden. Bei dieser vorwiegend für Sandformen und die Infiltration von organischen Polymeren bestimmten Anwendung ist die Schmelze im Ofenraum, während der Formfüllung und während der beginnenden Erstarrung lange dem Vakuum ausgesetzt. Gerade bei dickwandigem Sandguß und Sandguß im allgemeinen liegen lange Erstarrungzeiten vor, die die Neigung zur Bildung von Gasporosität verstärken, wobei ein Vakuum diesen Vorgang weiter verschärft.

Der Erfindung liegt die Aufgabe zugrunde, ein gattungsgemäßes Verfahren vorzugschlagen, bei dem die vorerwähnten Probleme nicht bestehen.

Die Lösung dieser Aufgabe ist im Kennzeichen der Ansprüche 1 und 6 angegeben. Die Unteransprüche 2 bis 5 und 7 bis 12 enthalten sinnvolle ergänzende Maßnahmen.

Mit dem erfindungsgemäßen Verfahren wird eine prozeßsichere Herstellung einer lokal verbesserten Leichtbaubremsscheibe durch entsprechend vorbehandelte schaumartige Keramikpreform und durch den Einsatz eines kombinierten Vakuum / Niederdruck bzw. Vakuum / Gegendruckgießverfahrens zur vollständigen Infiltration mit homogener Gefügeausbildung ermöglicht.

Ringförmige Schaumkeramikeinlagen regelmäßiger Struktur mit einer Feinheit von 10 bis 50 ppi werden ohne festigkeitssteigernde Beschichtungen hergestellt und statt dessen mit einem Metall, vorzugsweise Ni, beschichtet. Die Nickelbeschichtung muß dabei in alle Porenräume der Keramik gelangen. Diese Nickelbeschichtung ermöglicht einerseits die Anwendung niedrigerer Drücke zur Infiltration und andererseits die gleichmäßige Ausbildung der in den Porositäten erstarrenden Metallmatrix. Durch diese Beschichtung wird außerdem sowohl die unerwünschte Ausbildung von Schwindungshohlräumen zwischen Metall und Keramik, als auch die Ausbildung eines dreidimensionalen Netzes aus Luft in verschleißbelasteten Bereichen unterdrückt.

Die Schaumkeramiksegmente, die vorzugsweise eine Dicke von 1/3 des jeweiligen Bremsgurtes besitzen, können in dieser Gestalt ohne besondere Vorwärmung in einer metallischen Gießform positioniert und in einem nachfolgend näher beschriebenen Gießprozeß mit dem Gießmetall sicher verbunden werden.

Das Gießmetall befindet sich in einem Tiegelgefäß, das in einem abgeschlossenen Vergießofen plaziert ist. Die metallische Form befindet sich ebenfalls in einem geschlossenen Behälter, der über dem Vergießofen angeordnet ist. Beide Behälter sind einerseits über das Steigrohr und andererseits über ein Rohrsystem miteinander verbunden.

Die Drücke in beiden Behältern können sowohl separat als auch getrennt voneinander beeinflußt werden. Ein Kompressor befördert hierzu wahlweise Druckluft oder ein anderes Gas zur Druckbeaufschlagung in die Behälter bzw. es fördert eine Vakuumpumpe mit kombiniertem Vakuumkessel das jeweilige Druckmedium aus den Behältern hinaus. Zum Schutz der Vakuumpumpe vor heißen Betriebsgasen aus dem Ofen- oder Kokillenraum wird ein Gaskühler zwischengeschaltet.

Zu Beginn des Herstellprozesses wird ein Vakuum eingestellt, das nicht wie in den meisten Verfahren im oberen Behälter alleine wirkt und somit die Formfüllung initiieren würde, sondern vielmehr in beiden Behältern bis zu 1 mbar Absolutdruck erreicht. Nur durch die Einstellung des Vakuums in beiden Behältern ist es möglich, große Luftmengen aus dem System zu entfernen und damit derartig geringe Vakuum-Werte in unmodifizierten Gießmaschinen zu realisieren. Wollte man den gleichen Volumenanteil an Luft nur durch Vakuum im Behälter aus der Keramik entfernten, wäre ein aufwendiger Mechanismus zur Ausbildung des Übergangs zwischen Steigrohr und Formhohlraum anzubringen. Ohne die Anwendung eines Vakuums während des Gießprozesses ist zudem die Infiltration der feinen Mikroporosität nicht zu realisieren.

Nachdem in beiden Behältern Vakuum eingestellt wurde, sind verschiedene Druckverläufe in Abhängigkeit von der Zeit möglich. Dabei wird prinzipiell durch Druckbeaufschlagung des Ofenraumes die Formfüllung begonnen und somit steigendes Gießen durchgeführt. Nach vollendeter Formfüllung wird im Gegensatz zu anderen Verfahren die Druckbeaufschlagung auf den Kokillenraum erweitert, d.h. das Vakuum wird mit den Vorteilen des Gegendruckgießens kombiniert. Dies hat einerseits den Vorteil, daß bei der Erstarrung die Aussscheidung von Gasen weitgehend unterdrückt wird und andererseits die Verwendung von druckbeaufschlagten offenen Speisern zur Dichtspeisung erstarrungsbedingter Fehlstellen und zur Unterstützung der Infiltration zu nutzen sind.

Darüber hinaus ermöglicht die Kombination des Vakuums mit dem modifizierten Gegendruckgießen die Einstellung besserer mechanisch-technologischer Werte, als sie bei Gußstücken nach dem Gegendruckgießen bekannt sind.

## Patentansprüche

1. Verfahren zur Herstellung von lokal keramikverstärkten, gegossenen Bremsscheiben aus Leichtmetallegierungen, vorzugsweise AlSi-Legierungen, insbesondere für Achs- oder Radbremsscheiben von Schienenfahrzeugen, mit einem ringförmigen Tragkörper aus einer Leichtmetallegierung, auf welchem sich ein- oder beidseitig eine Schicht befindet, die aus mit der Leichtmetallegierung gefüllten offenporigen Schaumkeramikelementen besteht, **dadurch gekennzeichnet,** daß die offenporigen Keramiken vor dem Eingießen der Leichtmetallegierung mit einem Metall beschichtet werden.

2. Verfahren nach Anspruch 1, **dadurch gekennzeichnet,** daß die Schaumkeramikeinlagen mit Nickel beschichtet werden.

3. Verfahren nach Anspruch 1 oder 2, **dadurch gekennzeichnet,** daß Schaumkeramikeinlagen regelmäßiger oder unregelmäßiger Struktur mit einer Feinheit von 10 bis 50 ppi (pores per inch) verwendet werden.

4. Verfahren nach Anspruch 1, 2 oder 3, **dadurch gekennzeichnet,** daß die Schaumkeramikeinlagen eine Größe von 20 bis 50 % der Bremsgurtdicke besitzen.

5. Verfahren nach einem der Ansprüche 1 bis 4, **dadurch gekennzeichnet,** daß die Schaumkeramikeinlagen eine Dicke von 10 bis 25 mm haben.

6. Verfahren zur Herstellung von lokal keramikverstärkten, gegossenen Bremsscheiben aus Leichtmetalllegierungen, vorzugsweise AlSi-Legierungen, insbesondere für Achs- oder Radbremsscheiben von Schienenfahrzeugen, mit einem ringförmigen Tragkörper aus einer Leichtmetallegierung, auf welchem sich ein- oder beidseitig eine Schicht befindet, die aus einem mit der Leichtmetallegierung gefüllten Keramikelement besteht, **dadurch gekennzeichnet,** daß
a) das Gießmetall in ein an sich bekanntes Tiegelgefäß eines abgeschlossenen Vergießofens gefüllt wird, der über ein Steigrohr mit einer darüber angeordneten metallischen Gießform verbunden ist, die sich ebenfalls in einem verschließbaren Behälter befindet,
b) ringförmige Keramikelemente oder zu einem Ring zusammengefügte Keramikelemente in die Gießform eingelegt werden,
c) sowohl im Tiegelgefäß als auch in der Gießform ein Vakuum erzeugt wird,
d) durch Druckbeaufschlagung des Ofenraumes die Schmelze über das Steigerohr in die Gießform geleitet wird.

7. Verfahren nach mindestens einem der vorhergehenden Ansprüche, **dadurch gekennzeichnet,** daß nach beendeter Füllung der Gießform auch der Druck im Behälter mit der Gießform erhöht wird.

8. Verfahren nach mindestens einem der vorhergehenden Ansprüche, **dadurch gekennzeichnet,** daß im Tiegelgefäß und/oder in der Gießform ein Vakuum von bis zu 1 mbar Absolutdruck erzeugt wird.

9. Verfahren nach mindestens einem der vorhergehenden Ansprüche, **dadurch gekennzeichnet,** daß in der Gießform nach beendeter Füllung ein Druck von 0,4 bis 1 bar erzeugt wird.

10. Verfahren nach mindestens einem der vorhergehenden Ansprüche, **dadurch gekennzeichnet,** daß die Schmelze beim Füllen der Gießform von der der Reibfläche abgekehrten Seite in die Keramikelemente eingeleitet wird.

11. Verfahren nach mindestens einem der vorhergehenden Ansprüche, **dadurch gekennzeichnet,** daß bei Herstellung einer innenbelüfteten Wellenbremsscheibe mit beidseitig angeordneten Reibringflächen die Schmelze zwischen die mit Abstand zueinander angeordneten Keramikelemente radial vom Zentrum nach außen geleitet wird.

12. Verfahren nach Anspruch 11, **dadurch gekennzeichnet,** daß Abstandshalter zwischen den Keramikelementen angeordnet werden und/oder der Sandkern als Abstandshalter für die Keramikelemente dient.
